# EUROPEAN PATENT APPLICATION

(11) **EP 3 364 362 A1**
(43) Date of publication of application: **22.08.2018**
(21) Application number: 18157611.7
(22) Date of filing: 20.02.2018
(51) Int. Cl.: G06Q 40/00, G06Q 20/20, G06Q 30/02

(54) **TAX-EXEMPT PROCESSING APPARATUS AND TAX-EXEMPT PROCESSING METHOD**

(30) Priority: 20.02.2017 JP 2017029085
(71) Applicant: Toshiba TEC Kabushiki Kaisha, Tokyo 141-8562 (JP)
(72) Inventor: MOCHIZUKI, Katsuhito, Shinagawa-ku,, Tokyo 141-8562 (JP)
(74) Representative: Takeuchi, Maya

(57) **Abstract**

According to an embodiment, a tax-exempt processing apparatus includes a memory device, an output device, and a processor. The processor determines, in a case where the processor determines that the customer is a person-being-exempt-from-paying-tax, whether the tax amount of products that the customer purchases reaches a predetermined tax-exempt amount or not on a basis of the tax-exempt condition stored in the memory device. Further, the processor causes, in a case where the processor determines that the calculated tax amount is less than the predetermined money amount, the output device to output an insufficient amount of the calculated tax amount insufficient for the predetermined money amount.

## Description

### FIELD

The present invention relates to the field of image processing technologies in general, and embodiments to be described herein relate in particular to a tax-exempt processing apparatus and a tax-exempt processing method.

### BACKGROUND

Recently, a large number of customers from foreign countries (for example, foreign tourists) come to retail stores such as convenience stores, supermarkets, and shopping centers, and the number of opportunities of executing tax-exempt processing when selling products is thus increased.

Depending on countries or regions, in such tax-exempt processing, for example, the tax-exempt money amount range is defined depending on the kind of tax-exempt products.

So a customer pays attention such that the purchased products falls within the tax-exempt range. However, it is difficult for a customer to calculate the sum of the money amount for each kind of products while purchasing products, and to confirm whether the total price falls within the tax-exempt range or not.

In such a situation, when executing product register processing for purchased products at a register, a customer asks a cashier whether the total price of the purchased products falls within the tax-exempt range or not.

Every time a customer asks a question, a cashier has to find tax-exempt products out of purchased products, calculate the total price of the tax-exempt products, and confirm whether the calculated total price falls within the tax-exempt amount range or not.

In such a situation, a cashier cannot smoothly operate the register for the product register processing, and cannot answer for the customer's question promptly.

In view of the above-mentioned situation, for example, there is known a technique in which a mobile terminal of a customer reads the prices of products to be purchased, and the mobile terminal displays the insufficient amount of the total price insufficient for the tax-exempt range to thereby inform the customer of that.

A foreign customer can confirm that the total price of tax-exempt products falls within the tax-exempt amount range. However, where the total price of tax-exempt products is less than the tax-exempt amount range, it is burdensome for a foreign customer to purchase again tax-exempt products for the insufficient amount.

To solve such problem, there is provided a tax-exempt processing apparatus, comprising:
a first input device configured to input information of a customer who purchases a product;
a second input device configured to input information of the product that the customer purchases;
a memory device configured to store a tax-exempt condition;
an output device configured to output information of a tax amount of the product that the customer purchases; and
a processor configured to
   determine whether the customer is a person-being-exempt-from-paying-tax or not on a basis of the information of the customer input by the first input device,
   calculate a tax amount of the product that the customer purchases on a basis of the information of the product input by the second input device,
   determine, in a case where the processor determines that the customer is the person-being-exempt-from-paying-tax, whether the calculated tax amount reaches a predetermined tax-exempt amount or not on a basis of the tax-exempt condition stored in the memory device, and
   cause, in a case where the processor determines that the calculated tax amount is less than the predetermined money amount, the output device to output an insufficient amount of the calculated tax amount insufficient for the predetermined money amount.

Preferably, the processor is configured to cause the output device to output information of a recommended product, a price of the recommended product being the insufficient amount or more, such that the calculated tax amount reaches the predetermined money amount.

Preferably still, the memory device is configured to store information of at least prices of a plurality of available products, and the processor is configured to
select the recommended product from the plurality of products on a basis of the information of the prices stored in the memory device, and
cause the output device to output the information of the selected recommended product.

Preferably yet, the processor is configured to
calculate a value indicating likelihood of the customer's purchase on a basis of past sales performances of the plurality of products stored in the memory device,
select the recommended product from the plurality of products stored in the memory device on a basis of the calculated value indicating likelihood of purchase, and
cause the output device to output the information of the selected recommended product.

Suitably, the output device includes a display device, and
the processor is configured to
cause the display device to display a selection condition for the recommended product,
receive selection of the selection condition from the customer via the display device,
select the recommended product on a basis of the selection condition selected by the customer, and
cause the display device to display the selected recommended product.

Suitably still, the first input device includes a passport reader that reads passport information of the customer as information of the customer who purchases the product.

Suitably yet, the second input device includes a barcode reader that reads product information contained in a barcode on the product that the customer purchases.

Typically, the memory device is configured to store tax-exempt identifier information and price information of all the available products, the tax-exempt identifier information indicating whether the available products are tax-exempt products or not, and
the processor is configured to determine whether the product that the customer purchases is the tax-exempt product or not on a basis of the tax-exempt identifier information stored in the memory device.

Typically still, the processor is configured to calculate a total price of products that the customer purchases for each tax-exempt product on a basis of a determined result of the tax-exempt product.

The invention also relates to a tax-exempt processing method for tax on a product that a customer purchases, the method comprising steps of:
determining whether the customer is a person-being-exempt-from-paying-tax or not on a basis of information of the customer input by a first input device;
calculating a tax amount of the product that the customer purchases on a basis of information of the product that the customer purchases input by a second input device;
determining, in a case where it is determined that the customer is a person-being-exempt-from-paying-tax, whether the calculated tax amount reaches a predetermined tax-exempt amount or not on a basis of a tax-exempt condition stored in a memory device; and
causing, in a case where it is determined that the calculated tax amount is less than the predetermined money amount, an output device to output an insufficient amount of the calculated tax amount insufficient for the predetermined money amount.

Preferably, the tax-exempt processing method further comprises step of:
causing the output device to output information of a recommended product, a price of the recommended product being the insufficient amount or more, such that the calculated tax amount reaches the predetermined money amount.

Preferably still, the tax-exempt processing method further comprises step of:
selecting the recommended product from a plurality of available products on a basis of information of prices stored in the memory device, and
causing the output device to output the information of the selected recommended product.

Preferably yet, the tax-exempt processing method further comprises steps of:
calculating a value indicating likelihood of the customer's purchase on a basis of past sales performances of the plurality of products stored in the memory device,
selecting the recommended product from the plurality of products stored in the memory device on a basis of the calculated value indicating likelihood of purchase, and
causing the output device to output the information of the selected recommended product.

Suitably, the tax-exempt processing method further comprises steps of:
causing a display device included in the output device to display a selection condition for the recommended product,
receiving selection of the selection condition from the customer via the display device,
selecting the recommended product on a basis of the selection condition selected by the customer, and
causing the display device to display the selected recommended product.

Suitably still, the tax-exempt processing method further comprises step of:
determining whether the product that the customer purchases is the tax-exempt product or not on a basis of a tax-exempt identifier information of all the available products stored in the memory device, the tax-exempt identifier information indicating whether the available products are tax-exempt products or not.

### BRIEF DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a diagram showing a system configuration of the tax-exempt processing apparatus of an embodiment.
Fig. 2 is a hardware block diagram showing a hardware configuration of the POS terminal of the embodiment.
Fig. 3 is a hardware block diagram showing a hardware configuration of the shop server of the embodiment.
Fig. 4 is a diagram showing an example of a structure of the tax-exempt category table of the embodiment.
Fig. 5 is a diagram showing an example of a structure of the tax-exempt range table of the embodiment.
Fig. 6 is a diagram showing an example of a data structure of the product master file of the embodiment.
Fig. 7 is a functional block diagram showing a functional configuration of the tax-exempt processing apparatus of the embodiment.
Fig. 8A is a diagram showing an example of processing of selecting the recommended product of the embodiment.
Fig. 8B is a diagram showing an example of processing of selecting the recommended product of the embodiment.
F Fig. 9 is a flowchart showing processing executed by the tax-exempt processing apparatus of the embodiment.
Fig. 10 is a functional block diagram showing a functional configuration of the tax-exempt processing apparatus of the embodiment.
Fig. 11 is a diagram showing an example of the product master file, in which the promotion priority is registered, of the embodiment.
Fig. 12 is a flowchart showing a processing flow of selecting the recommended product by the selecting module of the embodiment.

### DETAILED DESCRIPTION

According to an embodiment, a tax-exempt processing apparatus includes a first input device, a second input device, and a memory device.

The first input device inputs information of a customer who purchases a product.

The second input device inputs information of the product that the customer purchases.

The memory device stores a tax-exempt condition.

The output device outputs information of a tax amount of the product that the customer purchases.

The processor determines whether the customer is a person-being-exempt-from-paying-tax or not on a basis of the information of the customer input by the first input device.

The processor calculates a tax amount of the product that the customer purchases on a basis of the information of the product input by the second input device.

The processor determines, in a case where the processor determines that the customer is a person-being-exempt-from-paying-tax, whether the calculated tax amount reaches a predetermined tax-exempt amount or not on a basis of the tax-exempt condition stored in the memory device.

Further, the processor causes, in a case where the processor determines that the calculated tax amount is less than the predetermined money amount, the output device to output an insufficient amount of the calculated tax amount insufficient for the predetermined money amount.

### (First embodiment)

The tax-exempt processing apparatus 100a of a first embodiment will be described with reference to the drawings.

In the drawings, the same reference symbols denote the same or similar parts.

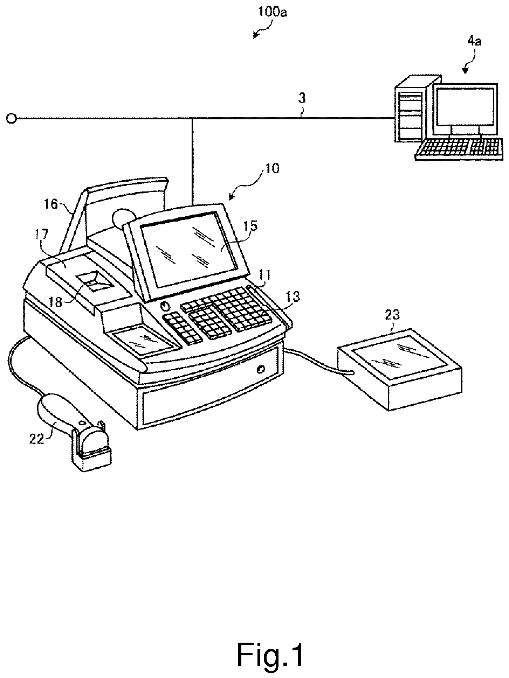

Fig. 1 is a diagram showing a system configuration of the tax-exempt processing apparatus 100a in a shop.

The tax-exempt processing apparatus 100a includes the POS terminal (Point Of Sales) 10 and the shop server 4a.

The POS terminal 10 is a terminal that executes accounting processing of products that a customer purchases.

Note that Fig. 1 shows only one POS terminal 10. However, the number does not matter. The tax-exempt processing apparatus 100a may include a plurality of POS terminals 10.

The shop server 4a stores product information of products available at the shop (information of available products), and information necessary for the tax-exempt processing.

The shop server 4a determines whether the total price of tax-exempt products or the tax amount of the tax-exempt products is within a tax-exempt range or not for a customer who requires tax-exempt processing. The tax-exempt range indicates a range of a predetermined money amount, i.e., a tax-exempt-permitted money amount.

Where the shop server 4a determines that the total price of tax-exempt products or the tax amount of tax-exempt products is not within the tax-exempt range, the shop server 4a selects a recommended product Rm and suggests the selected recommended product Rm to a customer.

Note that the shop server 4a is connected to the POS terminal 10 via the communication network 3 such as a LAN (Local Area Network) such that they can communicate with each other.

As shown in Fig. 1, the POS terminal 10 includes, as input devices, the card reader/writer (R/W) 11 and the keyboard 13.

The card R/W 11 reads card information from and writes information in a card such as a credit card and a reward card for settlement.

The keyboard 13 includes various keys (described later).

The POS terminal 10 further includes output devices.

The output devices include the cashier display device 15, the customer display device 16, and the printer 17.

Each of the cashier display device 15 and the customer display device 16 is, for example, a liquid crystal display device.

The printer 17 prints sales information on long receipt paper.

The printer 17 discharges the receipt paper, on which the sales information is printed, from the receipt outlet 18 to thereby issue a receipt.

Note that each of the cashier display device 15 and the customer display device 16 has a touch panel function.

A cashier may touch and operate the cashier display device 15 and the customer display device 16 to simply input information in the POS terminal 10.

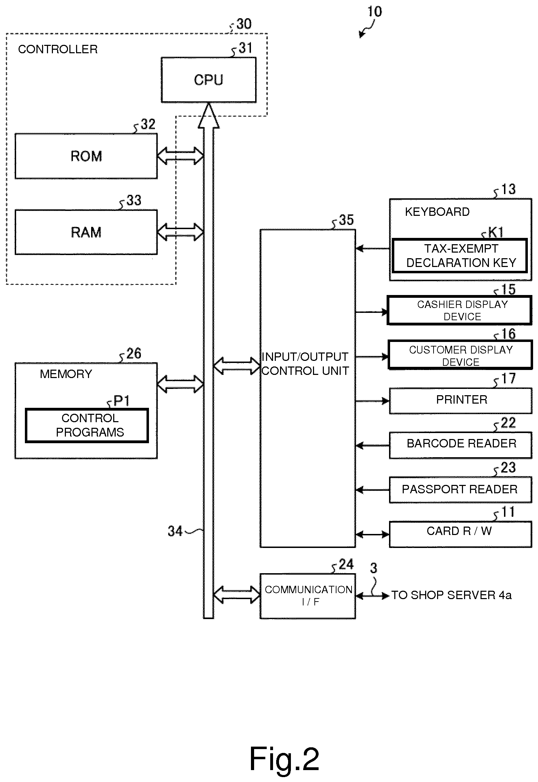

Further, as shown in Fig. 2, the POS terminal 10 further includes, as an input device, the barcode reader 22 and the passport reader 23.

The barcode reader 22 inputs information of products that a customer purchases. In the following description, products that a customer will purchase (products to be purchased) and products that a customer purchased will be collectively referred to as purchased products. Further, purchased products, the products being tax-exempt products, will sometimes be especially referred to as tax-exempt purchased products.

Specifically, the barcode reader 22 reads product information contained in a barcode on a purchased product. The barcode reader 22 sends read product information to the CPU (Central Processing Unit) 31 (Fig. 2).

The passport reader 23 is a reader device that reads information recorded in a customer's passport.

The passport reader 23 inputs information of a customer who purchases products.

Specifically, the passport reader 23 has an optical character recognition (OCR) function of optically reading texts on a passport. The passport reader 23 sends the read texts to the CPU 31 (Fig. 2).

### (Description of hardware configuration of POS terminal)

Fig. 2 is a hardware block diagram showing a hardware configuration of the POS terminal 10.

As shown in Fig. 2, the POS terminal 10 includes the controller 30.

The controller 30 is a computer including the processor 31, the ROM (Read Only Memory) 32, the RAM (Random Access Memory) 33, and the like.

The processor 31 is, for example, a CPU. Hereinafter, the processor 31 will be referred to as the CPU 31. The CPU 31 executes various computation processing and controls the respective devices.

The ROM 32 stores fixed data.

The RAM 33 stores various data rewritably. The RAM 33 is used as a work area.

The CPU 31, the ROM 32, and the RAM 33 are connected via the internal bus 34.

Further, peripheral devices are connected to the controller 30 of the POS terminal 10 via the input/output control unit 35.

The peripheral devices include the keyboard 13, the cashier display device 15, the customer display device 16, the printer 17, the card R/W 11, the barcode reader 22, the passport reader 23, and the like.

The controller 30 controls behaviors of those peripheral devices.

The keyboard 13 has various keys arrayed in blocks.

The various keys include, for example, numeric keys (or numeric keypad), a subtotal key, a cash-total key (or accept/cash-total key), a PLU (Price Look-Up) key, an enter key for defining numeric input of numeric keys, a clear key, and the like.

The numeric keys receive operations to input product codes, prices, and the like.

The subtotal key receives an operation to declare calculation of the sales total price.

The cash-total key receives an operation to declare end of cash in sales processing.

The PLU (Price Look-Up) key receives operations to specify various products.

The enter key receives an operation to define numeric input with the numeric keys.

The clear key receives an operation to clear numeric input with the numeric keys.

Further, the keyboard 13 includes an operator key such as the tax-exempt declaration key K1 necessary to execute tax-exempt processing.

The tax-exempt declaration key K1 is an operator key that declare execution of tax-exempt processing of the transaction.

Further, the keyboard 13 includes a section key, a receipt issue key, a checkout key, a product name list output key, and the like.

Further, the POS terminal 10 includes the communication interface (I/F) 24 that sends/receives data to/from the shop server 4a, i.e., the master device, via the communication network 3 in the shop.

The communication interface 24 is also connected to the internal bus 34.

Further, the POS terminal 10 includes memory devices.

As shown in Fig. 2, the memory devices of the POS terminal 10 includes the ROM 32 and the RAM 33, which are described above, and the memory 26.

Further, the memory 26 is connected to the controller 30 via the internal bus 34.

The memory 26 stores data after power-off. The memory 26 includes, for example, an HDD (Hard Disc Drive), a flash memory, or the like.

The memory 26 stores the control programs P1 such as an operating system and various computer programs, and various data files.

Further, the memory 26 stores a tax-exempt condition. Specifically, the memory 26 stores the tax-exempt category table F2 and the tax-exempt range table F3. The shop server 4a transmits the tax-exempt category table F2 and the tax-exempt range table F3 (described later).

Installable or executable files of the control programs P1 to be executed by the POS terminal 10 are recorded in non-transitory computer readable recording media such as a CD-ROM, a flexible disk (FD), a CD-R, and a DVD (Digital Versatile Disc) and supplied.

Note that the control programs P1 may be stored in a computer connected to a network such as the Internet, downloaded via the network, and supplied.

Further, the control programs P1 may be supplied or distributed via a network such as the Internet.

Further, the control programs P1 may be prestored in the ROM 32 and supplied.

### (Description of hardware configuration of shop server)

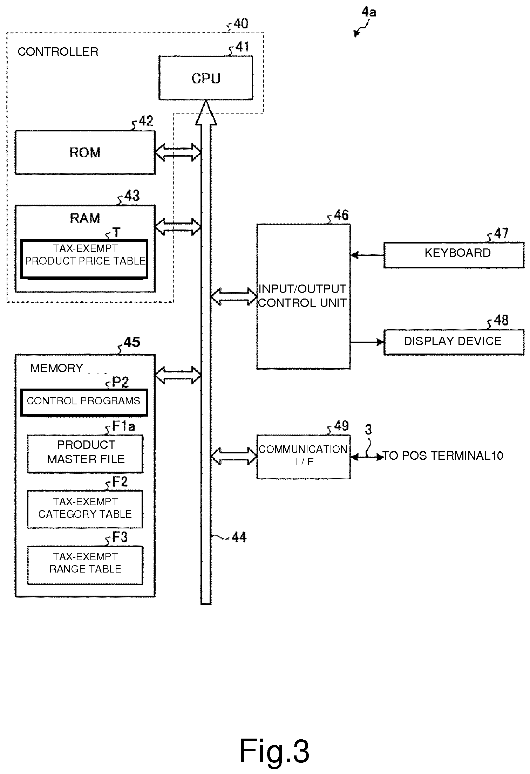

Fig. 3 is a hardware block diagram showing a hardware configuration of the shop server 4a.

The shop server 4a is in a backyard of a shop or the like. The shop server 4a includes the controller 40. The controller 40 is a computer including the processor 41, the ROM 42, the RAM 43, and the like.

The processor 41 is, for example, a CPU. Hereinafter, the processor 41 will be referred to as the CPU 41. The CPU 41 executes various computation processing and controls the respective devices.

The ROM 42 stores fixed data.

The RAM 43 stores various data rewritably. The RAM 43 is used as a work area.

The CPU 41, the ROM 42, and the RAM 43 are connected via the internal bus 44.

The RAM 43 stores the tax-exempt product price table T, which is used to calculate the total price of tax-exempt products. The tax-exempt product price table T will be described later.

Further, peripheral devices are connected to the shop server 4a via the input/output control unit 46. The peripheral devices include, for example, the keyboard 47 and the display device 48.

The controller 40 controls behaviors of those peripheral devices.

Further, the shop server 4a includes the communication interface (I/F) 49 that sends/receives data to/from the POS terminal 10 via the communication network 3 in the shop.

The communication interface 49 is also connected to the internal bus 44.

Further, the shop server 4a includes memory devices.

As shown in Fig. 3, the memory devices of the shop server 4a includes the ROM 42 and the RAM 43, which are described above, and the memory 45.

Further, the memory 45 is connected to the controller 40 via the internal bus 44.

The memory 45 stores data after power-off. The memory 45 includes, for example, an HDD, a flash memory, or the like.

The memory 45 stores the control programs P2 such as an operating system and various computer programs, and various data files.

Further, the memory 45 stores a tax-exempt condition. Specifically, the memory 45 stores the product master file F1a, the tax-exempt category table F2, and the tax-exempt range table F3. The files will be described later.

Installable or executable files of the control programs P2 to be executed by the the shop server 4a are recorded in non-transitory computer readable recording media such as a CD-ROM, a flexible disk, a CD-R, and a DVD and supplied.

Note that the control programs P2 may be stored in a computer connected to a network such as the Internet, downloaded via the network, and supplied.

Further, the control programs P2 may be supplied or distributed via a network such as the Internet.

Further, the control programs P2 may be prestored in the ROM 42 and supplied.

### (Description of tax-exempt processing)

Next, tax-exempt processing of the present embodiment will be described.

In some countries or regions, where a foreign customer purchases products and satisfies a predetermined tax-exempt condition, the foreign customer is exempt from paying tax, i.e., a so-called tax-exempt action. In this specification, the country or region means a country or region of a shop in which the tax-exempt processing apparatus of the present embodiment is installed.

The predetermined tax-exempt condition is provided for customers who purchase products.

Further, in some countries or regions, the predetermined tax-exempt condition is provided for not only customers who purchase products but also products to be purchased.

In other words, in order to get a tax-exempt action in Japan, for example, a customer has to have a foreign nationality other than Japan and a short-stay status.

Further, the customer has to be a visitor staying in Japan for 6 months or less after arrival.

It is possible to determine whether a customer satisfies those conditions by reading information written in a passport of the customer.

Further, in order to get a tax-exempt action in Japan, for example, it is necessary to satisfy a condition that a customer purchases predetermined products (tax-exempt products) within a range of a predetermined money amount.

Further, tax-exempt products are categorized into consumables (foods, beverages, cosmetics, and medicines, etc.) and general products (products such as clothes and sundries other than consumables).

Further, only where the total price (excluding tax) of consumables purchased at one shop on one day is 5,000 yen or more and 500,000 yen or less or where the total price (excluding tax) of general products is 5,000 yen or more, a tax-exempt action is applied, i.e., the customer is exempt from paying consumption tax in Japan.

In the present embodiment, the aforementioned tax-exempt category table F2 is a table that defines information specifying tax-exempt products, general products, and consumables.

Note that, in a country or a region in which the predetermined tax-exempt condition is not applied for products to be purchased, i.e., no category is defined for tax-exempt products, the tax-exempt category table F2 is not required.

Further, the tax-exempt range table F3 is a table that defines the range (excluding tax) of a predetermined money amount for the tax-exempt action for each of general products and consumables.

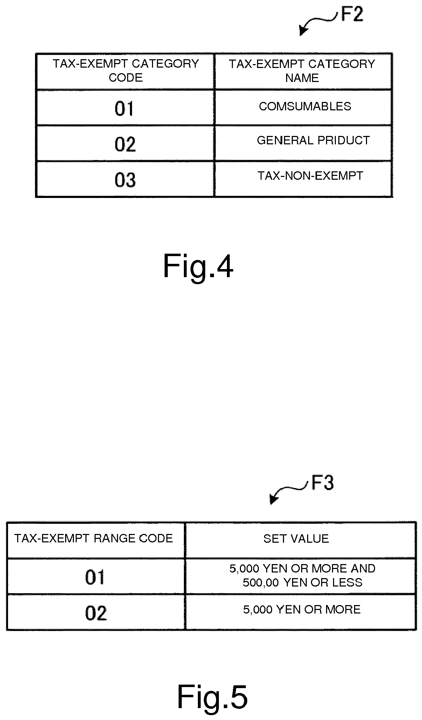

Fig. 4 is a diagram showing an example of a structure of the tax-exempt category table F2.

As shown in Fig. 4, the tax-exempt category table F2 stores tax-exempt category codes and tax-exempt category names defined corresponding to the tax-exempt category codes.

The tax-exempt category names include, for example, "consumables", "general products", and "tax-non-exempt".

The "consumables" means products such as foods, beverages, medicines, and cosmetics out of tax-exempt products.

The "general products" means commodity products other than consumables out of tax-exempt product.

The "tax-non-exempt" means tax-non-exempt products other than tax-exempt products.

The "consumables" has the tax-exempt category code "01".

The "general products" has the tax-exempt category code "02".

The "tax-non-exempt" has the tax-exempt category code "03".

Products registered in the product master file F1a (described later) have those tax-exempt category codes.

Fig. 5 is a diagram showing an example of a structure of the tax-exempt range table F3.

As shown in Fig. 5, the tax-exempt range table F3 stores tax-exempt range codes and set values indicating tax-exempt ranges defined corresponding to the tax-exempt range codes.

The tax-exempt range codes correspond to the tax-exempt category codes.

The set value indicates a range of the total price or the tax amount of tax-exempt purchased products (consumables and general products) for the tax-exempt action for each tax-exempt category.

In the example of Fig. 5, each set value indicates a range of the total price of tax-exempt purchased products (consumables and general products).

In the example of Fig. 5, the tax-exempt range code "01" defines that the tax-exempt range for consumables is 5,000 yen or more and 500,000 yen or less (price excluding tax).

Further, the tax-exempt range code "02" defines that the tax-exempt range for general products is 5,000 yen or more (price excluding tax).

Note that, as described above, where there is no category of tax-exempt products, a tax-exempt range code is not required, and it is only necessary to define a set value in the tax-exempt range table F3.

In other words, the configurations of the tax-exempt category table F2 and the tax-exempt range table F3 are determined depending on tax-exempt conditions of a country or a region.

### (Description of configuration of product master file)

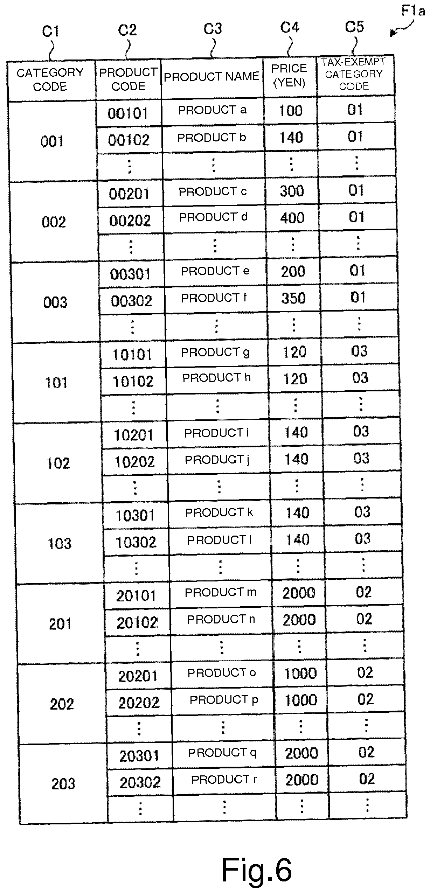

Fig. 6 is a diagram showing an example of a data structure of the product master file F1a.

As shown in Fig. 6, the product master file F1a stores the product code C2 uniquely identifying a product to be sold and registered (each product of all the available products in a shop).

Further, the product master file F1a registers product information corresponding to the the product code C2. The product information includes the product name C3, the price C4 of a product, the tax-exempt category code C5, and the category code C 1.

The products registered in the product master file F1a are sorted into groups depending on the category codes C1. The category codes C1 indicate categories of products such as alcoholic beverages, foods, and clothes, for example.

In other words, the products registered in the product master file F1a are sorted on a basis of the category codes C1 indicating categories of products such as alcoholic beverages, foods, and clothes, for example.

The tax-exempt category code C5 of each product registered in the product master file F1a is a code defined in the aforementioned tax-exempt category table F2 (see Fig. 4).

Note that the product master file F1a has a so-called relational database structure.

In other words, it is possible to sort information registered in the product master file F1a on a basis of search conditions set as necessary without difficulty.

For example, it is possible to execute a search operation such as "sorting products having the tax-exempt category code C5 "01" in the ascending order of the price C4" without difficulty.

Note that, as described above, if there is no tax-exempt product category, it is not necessary to register the tax-exempt category code C5 in the product master file F1a.

In other words, the product master file F1a is determined also depending on tax-exempt conditions of a country or a region.

### (Description of functional configuration of tax-exempt processing apparatus)

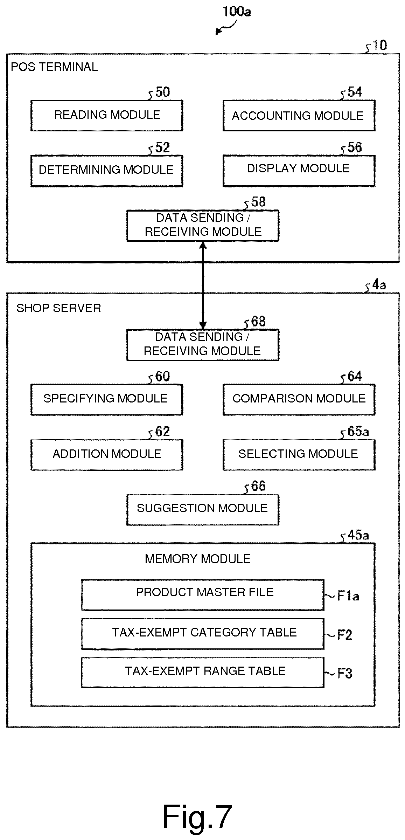

Fig. 7 is a functional block diagram showing a functional configuration of the tax-exempt processing apparatus 100a.

The CPU 31 (see Fig. 2) of the POS terminal 10 executes the control programs P1 to operate as the reading module 50, the determining module 52, the accounting module 54, the display module 56, and the data sending/receiving module 58 of Fig. 7 as functional modules.

The reading module 50 is an example of a reading means. The reading module 50 causes the barcode reader 22 (see Fig. 2) to read product information of purchased products.

The determining module 52 is an example of a determining means. The determining module 52 determines whether a customer is a person-being-exempt-from-paying-tax or not on a basis of passport information of the customer read by the passport reader 23 (see Fig. 2).

Where the customer is a person-being-exempt-from-paying-tax, the accounting module 54 executes accounting processing including tax-exempt processing for settlement of tax-exempt purchased products.

Note that, in some countries or regions, tax-exempt processing is executed at not a shop, at which a customer purchases products, but a predetermined site (for example, airport, etc.). In such countries or regions, even if the customer is a person-being-exempt-from-paying-tax, the accounting module 54 executes general accounting processing without tax-exempt processing.

Further, where the customer is a person-being-exempt-from-paying-tax, the accounting module 54 executes general accounting processing for settlement of purchased products.

The display module 56 displays information of a calculation result of the addition module 62 (described later), i.e., information of the total price of tax-exempt purchased products, on the customer display device 16 (see Fig. 2). Note that the information of the total price includes information of the tax amount based on the total price. Further, the display module 56 may display the information of the total price of tax-exempt purchased products on not only the customer display device 16 but also the cashier display device 15.

Further, the display module 56 displays whether the calculation result (total price or tax amount of tax-exempt purchased products) reaches the predetermined money amount (or predetermined money amount range) or not.

Specifically, the display module 56 displays whether the calculation result is within the tax-exempt range (see set value of Fig. 5) or not.

Further, the display module 56 displays an insufficient amount for the minimum value of the tax-exempt range of the calculation result.

Further, the display module 56 displays an excess amount for the maximum value of the tax-exempt range of the calculation result, and displays other information.

Further, on the condition that the calculation result of the addition module 62 is less than the minimum value of the tax-exempt range, the display module 56 displays the recommended product Rm (described later) on the customer display device 16.

The data sending/receiving module 58 sends/receives information to/from the POS terminal 10 and the shop server 4a.

The CPU 41 (see Fig. 3) of the shop server 4a executes the control programs P2 to operate as the specifying module 60, the addition module 62, the comparison module 64, the selecting module 65a, the suggestion module 66, the data sending/receiving module 68, and the memory module 45a of Fig. 7 as functional modules.

The specifying module 60 is an example of a specifying means. On the condition that the determining module 52 determines that a customer is a person-being-exempt-from-paying-tax, the specifying module 60 specifies tax-exempt products out of purchased products on a basis of a reading result of the reading module 50.

Specifically, the specifying module 60 refers to the tax-exempt category code C5 of the product corresponding to the reading result of the reading module 50 in the product master file F1a (see Fig. 6).

Further, the specifying module 60 specifies whether the purchased product is a tax-exempt product or not on a basis of the tax-exempt category code C5.

Specifically, the specifying module 60 determines that the purchased product is a tax-exempt product where the tax-exempt category code C5 is "01" or "02".

Note that, as described above, if there is no tax-exempt product category, the specifying module 60 does not need to specify a tax-exempt product.

The addition module 62 is an example of an addition means. The addition module 62 adds the purchased amounts of tax-exempt products for each tax-exempt category, and thereby calculates the total price of the tax-exempt purchased products for each tax-exempt category.

As described above, if there is no tax-exempt product category, the addition module 62 calculates the total price of all the purchased products.

The calculation result for each tax-exempt category is written in the tax-exempt product price table T in the RAM 43 (see Fig. 3).

Note that, as described above, where the set value of the tax-exempt range table F3 is not the range of the total price of tax-exempt purchased products but the range of the tax amount of tax-exempt purchased products, the addition module 62 calculates the tax amount of tax-exempt purchased products on a basis of the calculated total price.

The comparison module 64 is an example of a comparison means. The comparison module 64 compares the calculation result of the addition module 62 with the tax-exempt range indicating the range of the tax-exempt-permitted money amount for each tax-exempt category in the tax-exempt range table F3.

Further, the comparison module 64 determines whether the calculation result of the addition module 62 reaches the tax-exempt range, i.e., within the tax-exempt range, or not.

The selecting module 65a (CPU 41) is an example of a selecting means. On the condition that the calculation result of the addition module 62 (CPU 41) is less than the minimum value of the tax-exempt range under the comparison result of the comparison module 64 (CPU 41), the selecting module 65a selects a recommended product Rm from tax-exempt products, the price of the recommended product Rm satisfying the insufficient amount for the minimum value of the tax-exempt range.

A specific method of selecting the recommended product Rm will be described later.

The suggestion module 66 is an example of a suggestion means. The suggestion module 66 suggests the customer to purchase the recommended product Rm selected by the selecting module 65a.

The data sending/receiving module 68 sends/receives information to/from the POS terminal 10 and the shop server 4a as necessary.

The memory module 45a stores the product master file F1a, the file of the tax-exempt category table F2, and the file of the tax-exempt range table F3 in the memory 45.

Note that the functional configuration of Fig. 7 is an example and is not the limitation.

For example, if the shop server 4a transmits the product master file F1a, the file of the tax-exempt category table F2, and the file of the tax-exempt range table F3 to the POS terminal 10, the controller 30 of the POS terminal 10 may operate as the specifying module 60, the addition module 62, the comparison module 64, and the suggestion module 66, i.e., the functional modules.

In particular, in a megastore in which a large number of POS terminals 10 are connected to the shop server 4a, preferably, the shop server 4a transmits the files stored by the memory module 45a to the POS terminals 10 and the POS terminals 10 execute tax-exempt processing such that the shop server 4a does not need to execute all the tax-exempt processing.

In this case, the aforementioned tax-exempt product price table T is generated in the RAM 33 (see Fig. 2) of the POS terminal 10. Note that, hereinafter, the description will be made on a basis of the functional configuration of Fig. 7.

### (Description of method of selecting recommended product)

Next, a method of selecting the recommended product Rm by the selecting module 65a will be described.

On the condition that the calculation result of the addition module 62 (total price or tax amount of tax-exempt purchased products) is less than the minimum value of the tax-exempt range, the selecting module 65a accesses the product master file F1a.

Note that, before accessing the product master file F1a, the selecting module 65a recognizes the insufficient amount of the total price (calculation result of the addition module 62) for the minimum value of the tax-exempt range and recognizes one of the tax-exempt categories (general products or consumables).

Firstly, the selecting module 65a accesses the field of the tax-exempt category code C5 of the product master file F1a, and refers to the products of the tax-exempt category, the total price or tax amount of the tax-exempt purchased products of this tax-exempt category being insufficient.

Further, the selecting module 65a sorts, in the ascending order of the price C4, the products of the tax-exempt category, the total price or tax amount of the tax-exempt purchased products of this tax-exempt category being insufficient, out of the information registered in the product master file F1a.

Note that, as described above, if there is no tax-exempt product category, the products are sorted in the ascending order of the price C4 without referring to the products of the tax-exempt category of the product master file F1a.

Further, the selecting module 65a selects a tax-exempt product, the price thereof being the insufficient amount or more of the total price of the purchased products insufficient for the minimum value of the tax-exempt range, such that the total price or tax amount of the purchased products reaches the minimum value of the tax-exempt range (tax-exempt range table of Fig. 5).

Specifically, the selecting module 65a refers to the sort result in the ascending order of the price C4, and selects the cheapest product as the recommended product Rm from the product master file F1a such that the total price or tax amount of the purchased products reaches the minimum value of the tax-exempt range (see tax-exempt range table of Fig. 5).

Note that, where there are a plurality of products having the same price in the product master file F1a, the selecting module 65a selects the plurality of products as the recommended products Rm.

Further, the suggestion module 66 converts the insufficient amount of the total price for the minimum value of the tax-exempt range and information of the recommended product Rm selected by the selecting module 65a into data format, with which the information can be displayed on the customer display device 16 (Fig. 2).

The suggestion module 66 sends the converted insufficient amount and the converted information of the recommended product Rm to the POS terminal 10 via the data sending/receiving module 68.

Note that the information of the recommended product Rm contains the product name C3 and the price C4 of the recommended product Rm.

The display module 56 of the POS terminal 10 displays the information of the recommended product Rm received from the shop server 4a on the customer display device 16.

A customer watches what is displayed on the customer display device 16, and recognizes that the recommended product Rm is a product, whose price satisfies the insufficient amount for the minimum value of the tax-exempt range.

Note that, where the selecting module 65a selects a plurality of products as the recommended products Rm, the suggestion module 66 may display all the plurality of selected recommended products on the customer display device 16 to provide an opportunity to select a product to the customer.

Further, where the minimum value of the tax-exempt range is to be satisfied efficiently by purchasing the plurality of recommended products Rm selected by the selecting module 65a, the suggestion module 66 of the shop server 4a may send information that bulk purchasing is good to the POS terminal 10. In this case, the display module 56 of the POS terminal 10 displays the information of the recommended product Rm and the information of the bulk purchasing together on the customer display device 16.

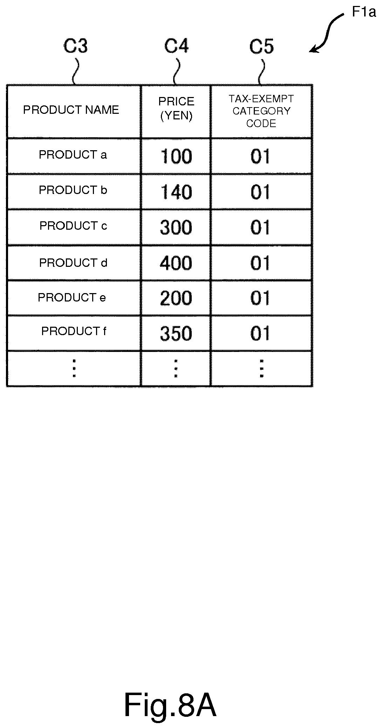

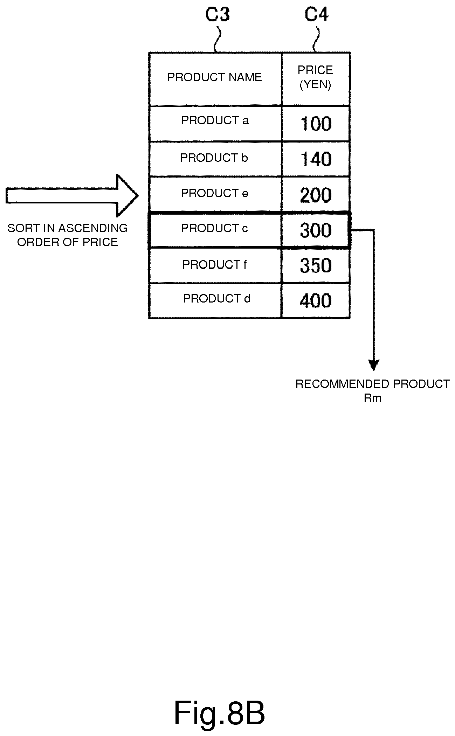

Each of Fig. 8A and Fig. 8B is a diagram showing an example of processing of selecting the recommended product Rm under an example in which the tax-exempt category code C5 is "01", i.e., consumables, and the total price is insufficient by 250 yen for the minimum value of the tax-exempt range of 5,000 yen.

Fig. 8A is a table only showing products of the tax-exempt category code C5 "01" extracted from the product master file F1a.

The selecting module 65a sorts the information of Fig. 8A in the ascending order of the prices C4 of the products.

Then, the selecting module 65a obtains the result of Fig. 8B.

Further, the selecting module 65a selects the product c, the price thereof being 250 yen or more and the cheapest, as the recommended product Rm.

Note that, as described above, if there is no tax-exempt product category, the processing of Fig. 8A is not required, and the the prices C4 of the products of the product master file F1a are only sorted in the ascending order.

### (Description of tax-exempt processing flow of tax-exempt processing apparatus)

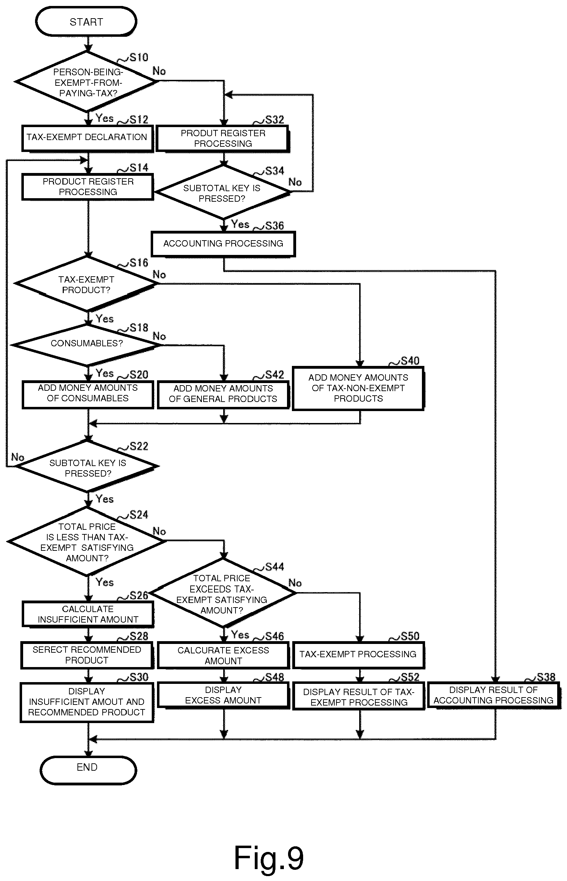

Next, with reference to Fig. 9, the processing flow of the tax-exempt processing apparatus 100a will be described.

Fig. 9 is a flowchart showing processing executed by the tax-exempt processing apparatus 100a.

In Step S10 of Fig. 9, the determining module 52 (CPU 31) determines whether a customer is a person-being-exempt-from-paying-tax or not.

Specifically, the determining module 52 determines whether a customer is a person-being-exempt-from-paying-tax or not on a basis of passport information of the customer read by the passport reader 23 (see Fig. 2).

Where the determining module 52 determines that the customer is a person-being-exempt-from-paying-tax (Step S10: Yes), the processing of the tax-exempt processing apparatus 100a proceeds to Step S12.

In Step S12, the CPU 31 of the controller 30 detects that the tax-exempt declaration key K1 of the keyboard 13 (see Fig. 2) is pressed by a cashier, and thereby declares tax-exempt registration. In other words, when the tax-exempt registration is declared, the tax-exempt processing on and after the next Step S14 is started.

In Step S14, the reading module 50 (CPU 31) executes product register processing of registering product information read by the barcode reader 22 (see Fig. 2).

In Step S16, the specifying module 60 (CPU 41) recognizes whether the purchased products, which are registered in the product register processing, are tax-exempt products or not on a basis of the reading result of the reading module 50 (CPU 31).

Where the specifying module 60 recognizes that the purchased products are tax-exempt products (Step S16: Yes), the processing of the tax-exempt processing apparatus 100a proceeds to Step S18.

Meanwhile, where the specifying module 60 recognizes that the purchased products are not tax-exempt products (Step S16: No), the processing of the tax-exempt processing apparatus 100a proceeds to Step S40.

In Step S40, the addition module 62 (CPU 41) adds the money amounts of tax-non-exempt products. After the money amounts of tax-non-exempt products are added, the processing of the tax-exempt processing apparatus 100a proceeds to Step S22.

In Step S18, the specifying module 60 (CPU 41) recognizes whether the tax-exempt category of the tax-exempt purchased products is consumables or not.

Where the specifying module 60 recognizes that tax-exempt purchased products are consumables (Step S18: Yes), the processing of the tax-exempt processing apparatus 100a proceeds to Step S20.

In Step S20, the addition module 62 (CPU 41) adds the money amounts of the consumables to thereby calculate the total price of the consumables. After the money amounts of the consumables are added, the processing of the tax-exempt processing apparatus 100a proceeds to Step S22.

Meanwhile, where the specifying module 60 recognizes that tax-exempt purchased products are not consumables (Step S18: No), the processing of the tax-exempt processing apparatus 100a proceeds to Step S42.

In Step S42, the addition module 62 adds the money amounts of general products to thereby calculate the total price of the general products. After the money amounts of the general products are added, the processing of the tax-exempt processing apparatus 100a proceeds to Step S22.

Note that, as described above, if there is no tax-exempt product category, the CPU 41 does not execute the processing of Step S16 and Step S18. After the product register processing of Step S14, instead of the processing of Step S20, Step S42, and Step S40, the CPU 41 calculates the total price of all the purchased products registered in the product register processing.

In Step S22, the accounting module 54 (CPU 31) determines whether the subtotal key is pressed or not.

Where the accounting module 54 determines that the subtotal key is pressed (Step S22: Yes), the processing of the tax-exempt processing apparatus 100a proceeds to Step S24.

Meanwhile, where the accounting module 54 determines that the subtotal key is not pressed (Step S22: No), the processing of the tax-exempt processing apparatus 100a returns to Step S14.

In Step S24, the comparison module 64 (CPU 41) determines whether the total price of the consumables or the total price of the general products is less than each tax-exempt satisfying amount (the minimum value of the tax-exempt range) or not.

Specifically, the comparison module 64 (CPU 41) determines whether at least one of the total price of the consumables and the total price of the general products is less than each tax-exempt satisfying amount (the minimum value of the tax-exempt range) on a basis of the set value of the tax-exempt range table F3.

Note that, in Fig. 5, the set value (tax-exempt range) of the tax-exempt range table F3 is the range of the total price of tax-exempt purchased products. To the contrary, as described above, where the set value (tax-exempt range) of the tax-exempt range table F3 is the range of the tax amount of tax-exempt purchased products, in Step S24, the comparison module 64 (CPU 41) determines whether the tax amount based on the total price of consumables is less than the tax-exempt satisfying amount (the minimum value of the tax-exempt range) or not.

Further, the comparison module 64 (CPU 41) determines whether the tax amount based on the total price of general products is less than the tax-exempt satisfying amount (the minimum value of the tax-exempt range) or not.

Further, as described above, if there is no tax-exempt product category, the comparison module 64 (CPU 41) determines whether the tax amount based on the total price of all the purchased products is less than the tax-exempt satisfying amount (the minimum value of the tax-exempt range) or not.

Further, in Step S24, where the comparison module 64 determines that the total price (or tax amount) of the consumables is less than the tax-exempt satisfying amount or the total price (or tax amount) of the general products is less than the tax-exempt satisfying amount (Step S24: Yes), the processing of the tax-exempt processing apparatus 100a proceeds to Step S26.

Meanwhile, where the comparison module 64 determines that the total price (or tax amount) of the consumables is the tax-exempt satisfying amount or more and the total price (or tax amount) of the general products is the tax-exempt satisfying amount or more (Step S24: No), the processing of the tax-exempt processing apparatus 100a proceeds to Step S44.

In Step S26, the comparison module 64 (CPU 41) calculates the insufficient amount of the total price of the consumables insufficient for the tax-exempt satisfying amount, or the insufficient amount of the total price of the general products insufficient for the tax-exempt satisfying amount.

Next, in Step S28, the selecting module 65a (CPU 41) selects the recommended product Rm from the product master file F1a.

Next, in Step S30, the suggestion module 66 (CPU 41) causes the customer display device 16 (Fig. 2) to display the insufficient amount for the tax-exempt satisfying amount and the recommended product Rm.

After displaying the insufficient amount and the recommended product Rm, the tax-exempt processing apparatus 100a finishes the processing of Fig. 9.

Meanwhile, where the comparison module 64 (CPU 41) determines that the total price (or tax amount) of the consumables is the tax-exempt satisfying amount or more, and the total price (or tax amount) of the general products is the tax-exempt satisfying amount or more (Step S24: No), as described above, the processing of the tax-exempt processing apparatus 100a proceeds to Step S44.

Further, in Step S44, the comparison module 64 determines whether the total price (or tax amount) of the consumables exceeds the tax-exempt satisfying amount or not.

Where the comparison module 64 determines that the total price (or tax amount) of the consumables exceeds the tax-exempt satisfying amount (Step S44: Yes), the processing of the tax-exempt processing apparatus 100a proceeds to Step S46.

In Step S46, the comparison module 64 (CPU 41) calculates the excess amount of the total price of the consumables beyond the tax-exempt satisfying amount (the maximum value of the tax-exempt range).

Next, in Step S48, the suggestion module 66 (CPU 41) causes the customer display device 16 (Fig. 2) to display the excess amount beyond the tax-exempt satisfying amount (the maximum value of the tax-exempt range).

After displaying the excess amount, the tax-exempt processing apparatus 100a finishes the processing of Fig. 9.

Further, in Step S44, where the comparison module 64 (CPU 41) determines that the total price of the consumables does not exceed the tax-exempt satisfying amount (the maximum value of the tax-exempt range) (Step S44: No), the processing of the tax-exempt processing apparatus 100a proceeds to Step S50.

In Step S50, the accounting module 54 (CPU 31) of the controller 30 executes accounting processing including tax-exempt processing for settlement of the products purchased by the customer.

Next, in Step S52, the suggestion module 66 (CPU 41) causes the customer display device 16 (see Fig. 2) to display the result of the tax-exempt processing including the prices of the products and the total payment price.

After displaying the result of the tax-exempt processing, the tax-exempt processing apparatus 100a finishes the processing of Fig. 9.

Note that the printer 17 prints the result of the tax-exempt processing and issues a receipt (not shown in Fig. 9).

### (Description of tax-non-exempt processing flow of tax-exempt processing apparatus)

In Step S10, where the determining module 52 (CPU 31) determines that the customer is a person-being-exempt-from-paying-tax (Step S10: No), the processing of the tax-exempt processing apparatus 100a proceeds to Step S32.

In Step S32, the reading module 50 (CPU 31) executes product register processing including registering product information read by the barcode reader 22 (see Fig. 2).

Next, in Step S34, the accounting module 54 (CPU 31) determines whether the subtotal key is pressed or not.

Where the accounting module 54 determines that the subtotal key is pressed (Step S34: Yes), the processing of the tax-exempt processing apparatus 100a proceeds to Step S36.

Meanwhile, where the accounting module 54 determines that the subtotal key is not pressed (Step S34: No), the processing of the tax-exempt processing apparatus 100a returns to Step S32.

In Step S36, the accounting module 54 (CPU 31) executes general accounting processing without tax-exempt processing.

Further, in Step S38, the accounting module 54 causes the customer display device 16 (see Fig. 2) to display the result of the accounting processing including the prices of the products and the total payment price.

After displaying the result of the accounting processing, the tax-exempt processing apparatus 100a finishes the processing of Fig. 9.

Note that the printer 17 prints the result of the accounting processing and issues a receipt (not shown in Fig. 9).

Note that, in the flowchart of Fig. 9, the suggestion module 66 (CPU 41) causes the customer display device 16 to display various information to thereby inform the customer of the tax-exempt achievement status and the recommended product Rm. Alternatively, the suggestion module 66 (CPU 41) may cause the cashier display device 15 to display the same information.

Alternatively, both the customer display device 16 and the cashier display device 15 may display that information.

Further, if the total payment price is beyond or insufficient for the tax-exempt range, a cashier may tell the customer that fact. Preferably, the cashier may recommend to purchase the recommended product Rm or recommend to give up any product such that the total payment price falls within the tax-exempt range.

### (Second embodiment)

As described in the first embodiment, a method of selecting the recommended product Rm is not limited to a selecting method based on prices of tax-exempt products.

Hereinafter, as a second embodiment, the tax-exempt processing apparatus 100b that selects the recommended product Rm on a basis of interest, preference, and the like of a customer will be described.

The hardware configuration of the tax-exempt processing apparatus 100b is the same as the hardware configuration of the tax-exempt processing apparatus 100a of the first embodiment.

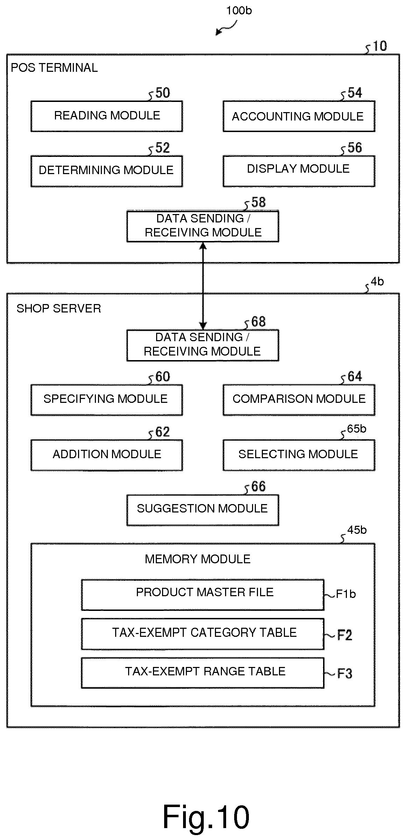

Fig. 10 is a functional block diagram showing a functional configuration of the tax-exempt processing apparatus 100b of the second embodiment.

The tax-exempt processing apparatus 100b includes the POS terminal 10 and the shop server 4b instead of the shop server 4a (Fig. 7).

The shop server 4b includes the selecting module 65b instead of the selecting module 65a (See Fig. 7).

Further, the shop server 4b includes the memory module 45b instead of the memory module 45a (see Fig. 7).

The memory module 45b stores the control programs P3 (not shown) instead of the control programs P2 (Fig. 3) in the memory 45.

Further, the memory module 45b stores the product master file F1b instead of the product master file F1a (Fig. 7) in the memory 45.

The selecting module 65b includes, in relation with the products registered in the product master file F1b, statistical data such as the past sales performance (sales history) and the basket analysis result.

The basket analysis is one analysis method for data mining, and a method of analyzing products purchased together.

Further, on the condition that the calculation result of the addition module 62 is less than the minimum value of the tax-exempt range under the comparison result of the comparison module 64, the selecting module 65b selects the recommended product Rm, the price thereof satisfying the insufficient amount for the minimum value, from the tax-exempt products registered in the product master file F1b.

At this time, firstly, the selecting module 65b calculates the promotion priority Pr of each product on a basis of the information of the purchased products in the product register processing (see Step S14 of Fig. 9) and the aforementioned statistical data.

The promotion priority Pr is a value indicating an order of likelihood that a customer purchases the product.

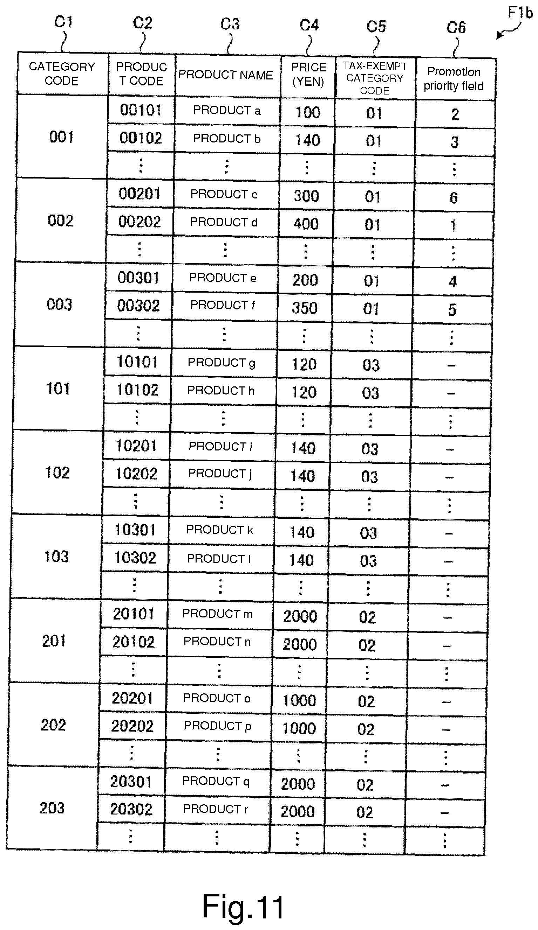

Further, the selecting module 65b registers the calculated promotion priority Pr in the promotion priority field C6 (see Fig. 11) of the product master file F1b.

Fig. 11 is a diagram showing an example of the product master file F1b, in which the promotion priority Pr is registered in the promotion priority field C6.

The promotion priority Pr may be calculated by using various methods.

For example, a tax-exempt product, which is purchased together with a tax-exempt product already registered in the product register processing, may be selected on a basis of a basket analysis result.

Further, the promotion priority Pr may be given in the descending order of sales performance (sales history) on a basis of the sales history of past tax-exempt products.

Note that, when calculating the promotion priority Pr, in order to avoid to purchase the same product for a plurality of times, preferably, the promotion priority Pr is calculated without the products already registered.

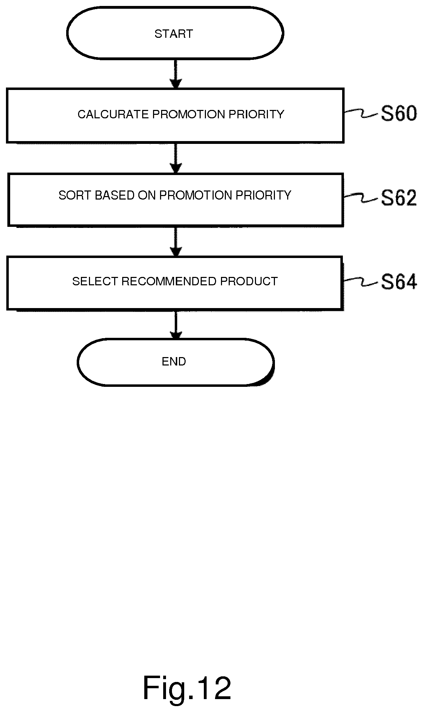

Hereinafter, with reference to the product master file F1b of Fig. 11 and the flowchart of Fig. 12, the procedure of selecting the recommended product Rm by the selecting module 65b will be described specifically, where the total price of consumables that a customer will purchase (consumables registered in product register processing) is insufficient for the minimum value of the tax-exempt range.

Note that, similar to the first embodiment, the tax-exempt category code is "01", i.e., consumables, and the total price is insufficient by 250 yen for the minimum value of the tax-exempt range of 5,000 yen.

Note that Fig. 12 is a flowchart showing a processing flow of selecting the recommended product Rm by the selecting module 65b of the second embodiment.

Firstly, in Step S60 of Fig. 12, the selecting module 65b (CPU 41) refers to information of tax-exempt purchased products, past sales performance, or statistical data such as a basket analysis result, and calculates the promotion priority Pr.

Note that it is not necessary to calculate the promotion priority Pr of all the products registered in the product master file F1b. It is only necessary to calculate the promotion priority Pr of the products, whose tax-exempt category is the same as the tax-exempt category of tax-exempt purchased products.

Subsequently, in Step S62, the selecting module 65b (CPU 41) sorts the rows of the product master file F1b of Fig. 11 in the descending order of the promotion priority Pr (ascending order of value).

In Step S64, the selecting module 65b (CPU 41) refers to the result of the promotion priority Pr sorted in the descending order, and selects the product having the highest promotion priority Pr as the recommended product Rm out of the products, the total price of the tax-exempt purchased products reaching the minimum value of the tax-exempt range.

For example, in the example of Fig. 11, the selecting module 65b selects the product d as the recommended product Rm.

Note that, when selecting the recommended product Rm, the selecting module 65b (CPU 41) may allow a customer to specify a selection condition for selecting the recommended product Rm.

For example, the selecting module 65b may show a customer, for example, a message "if you purchase one more product, you can get a tax-exempt action. Do you prefer foods, clothes, or alcoholic beverages?" or another message to narrow down a product category.

The customer inputs an answer to the question by using the touch panel of the customer display device 16 (Fig. 2).

Further, the selecting module 65b may select the recommended product Rm that the customer wishes on a basis of the customer's answer.

As described above, according to the tax-exempt processing apparatus 100a of the first embodiment, the determining module 52 (determining means) determines that the customer is a person-being-exempt-from-paying-tax. Where the determining module 52 determines that the customer is a person-being-exempt-from-paying-tax, the specifying module 60 (specifying means) determines whether the products having product information read by the reading module 50 (reading means) are tax-exempt products or not.

Further, the addition module 62 (addition means) calculates the total price of the tax-exempt products. The comparison module 64 (comparison means) compares the calculation result of the addition module 62 (aforementioned total price or tax amount) with the tax-exempt range indicating the range of the tax-exempt-permitted money amount.

Further, on the condition that the calculation result (total price or tax amount of tax-exempt product) is less than the minimum value of the tax-exempt range under the comparison result of the comparison module 64, the selecting module 65a (selecting means) selects the recommended product Rm, the price of the recommended product Rm satisfying the insufficient amount for the minimum value, from tax-exempt products.

The suggestion module 66 (suggestion means) suggests the selected recommended product Rm to a customer.

Therefore, the tax-exempt processing apparatus 100a of the first embodiment can appropriately suggest the recommended product Rm that reaches the tax-exempt amount to the customer.

Further, where there are tax-exempt categories, the addition module 62 (addition means) of the tax-exempt processing apparatus 100a calculates the total price of tax-exempt products for each tax-exempt category. Therefore, even if products of different tax-exempt categories are purchased together, it is possible to select the recommended product Rm for each tax-exempt category.

Further, the selecting module 65a (selecting means) of the tax-exempt processing apparatus 100a selects the recommended product Rm on a basis of the price of a tax-exempt product.

Therefore, it is possible to select the recommended product Rm easily and reliably.

Further, the selecting module 65b (selecting means) of the tax-exempt processing apparatus 100b selects the recommended product Rm on a basis of the past sales performance such as the sales history and the basket analysis result.

Therefore, it is possible to suggest the recommended product Rm to a customer as accurately as possible.

Further, the selecting module 65b (selecting means) of the tax-exempt processing apparatus 100b selects the recommended product Rm on a basis of the condition specified by a customer.

Therefore, it is possible to suggest the recommended product Rm to a customer more accurately.

Further, the tax-exempt processing apparatus 100a may have a suspend function. For example, when the suggestion module 66 suggests the recommended product Rm, or when the suggestion module 66 suggests the recommended product Rm, the tax-exempt processing apparatus 100a temporarily suspends the product register processing.

If the tax-exempt processing apparatus 100a includes such a suspend function, a customer can get a satisfactory opportunity to actually purchase the recommended product Rm. Note that the suspend function includes a function of printing identifier data identifying temporarily-suspended transaction data and issuing a receipt.

Further, after the customer puts the recommended product Rm in a basket and comes back to the register, the tax-exempt processing apparatus 100a causes the POS terminal 10 to read the identifier data of that receipt.

As a result, the POS terminal 10 of the tax-exempt processing apparatus 100a may resume the temporarily-suspended product register processing.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. A tax-exempt processing apparatus, comprising:
a first input device configured to input information of a customer who purchases a product;
a second input device configured to input information of the product that the customer purchases;
a memory device configured to store a tax-exempt condition;
an output device configured to output information of a tax amount of the product that the customer purchases; and
a processor configured to
determine whether the customer is a person-being-exempt-from-paying-tax or not on a basis of the information of the customer input by the first input device,
calculate a tax amount of the product that the customer purchases on a basis of the information of the product input by the second input device,
determine, in a case where the processor determines that the customer is the person-being-exempt-from-paying-tax, whether the calculated tax amount reaches a predetermined tax-exempt amount or not on a basis of the tax-exempt condition stored in the memory device, and
cause, in a case where the processor determines that the calculated tax amount is less than the predetermined money amount, the output device to output an insufficient amount of the calculated tax amount insufficient for the predetermined money amount.

2. The tax-exempt processing apparatus according to Claim 1, wherein
the processor is configured to cause the output device to output information of a recommended product, a price of the recommended product being the insufficient amount or more, such that the calculated tax amount reaches the predetermined money amount.

3. The tax-exempt processing apparatus according to Claim 2, wherein
the memory device is configured to store information of at least prices of a plurality of available products, and
the processor is configured to
select the recommended product from the plurality of products on a basis of the information of the prices stored in the memory device, and
cause the output device to output the information of the selected recommended product.

4. The tax-exempt processing apparatus according to Claim 3, wherein the processor is configured to
calculate a value indicating likelihood of the customer's purchase on a basis of past sales performances of the plurality of products stored in the memory device,
select the recommended product from the plurality of products stored in the memory device on a basis of the calculated value indicating likelihood of purchase, and
cause the output device to output the information of the selected recommended product.

5. The tax-exempt processing apparatus according to Claims 3 or 4, wherein
the output device includes a display device, and
the processor is configured to
cause the display device to display a selection condition for the recommended product,
receive selection of the selection condition from the customer via the display device,
select the recommended product on a basis of the selection condition selected by the customer, and
cause the display device to display the selected recommended product.

6. The tax-exempt processing apparatus according to any one of Claims 1 to 5, wherein
the first input device includes a passport reader that reads passport information of the customer as information of the customer who purchases the product.

7. The tax-exempt processing apparatus according to any one of Claims 1 to 6, wherein
the second input device includes a barcode reader that reads product information contained in a barcode on the product that the customer purchases.

8. The tax-exempt processing apparatus according to any one of Claims 1 to 7, wherein
the memory device is configured to store tax-exempt identifier information and price information of all the available products, the tax-exempt identifier information indicating whether the available products are tax-exempt products or not, and
the processor is configured to determine whether the product that the customer purchases is the tax-exempt product or not on a basis of the tax-exempt identifier information stored in the memory device.

9. The tax-exempt processing apparatus according to Claim 8, wherein the processor is configured to calculate a total price of products that the customer purchases for each tax-exempt product on a basis of a determined result of the tax-exempt product.

10. A tax-exempt processing method for tax on a product that a customer purchases, the method comprising steps of:
determining whether the customer is a person-being-exempt-from-paying-tax or not on a basis of information of the customer input by a first input device;
calculating a tax amount of the product that the customer purchases on a basis of information of the product that the customer purchases input by a second input device;
determining, in a case where it is determined that the customer is a person-being-exempt-from-paying-tax, whether the calculated tax amount reaches a predetermined tax-exempt amount or not on a basis of a tax-exempt condition stored in a memory device; and
causing, in a case where it is determined that the calculated tax amount is less than the predetermined money amount, an output device to output an insufficient amount of the calculated tax amount insufficient for the predetermined money amount.

11. The tax-exempt processing method according to Claim 10, further comprising step of:
causing the output device to output information of a recommended product, a price of the recommended product being the insufficient amount or more, such that the calculated tax amount reaches the predetermined money amount.

12. The tax-exempt processing method according to Claim 11, further comprising step of:
selecting the recommended product from a plurality of available products on a basis of information of prices stored in the memory device, and
causing the output device to output the information of the selected recommended product.

13. The tax-exempt processing method according to Claim 12, further comprising steps of:
calculating a value indicating likelihood of the customer's purchase on a basis of past sales performances of the plurality of products stored in the memory device,
selecting the recommended product from the plurality of products stored in the memory device on a basis of the calculated value indicating likelihood of purchase, and
causing the output device to output the information of the selected recommended product.

14. The tax-exempt processing method according to Claims 12 or 13, further comprising steps of:
causing a display device included in the output device to display a selection condition for the recommended product,
receiving selection of the selection condition from the customer via the display device,
selecting the recommended product on a basis of the selection condition selected by the customer, and
causing the display device to display the selected recommended product.

15. The tax-exempt processing method according to any one of Claims 10 to 14, further comprising step of:
determining whether the product that the customer purchases is the tax-exempt product or not on a basis of a tax-exempt identifier information of all the available products stored in the memory device, the tax-exempt identifier information indicating whether the available products are tax-exempt products or not.
